# FASCICULE DE BREVET EUROPEEN

(11) **EP 1 606 226 B1**
(45) Date de publication et mention de la délivrance du brevet: **14.01.2009**
(21) Numéro de dépôt: 04721215.4
(22) Date de dépôt: 17.03.2004
(51) Int. Cl.: C03C 25/50, C03C 25/12

(54) **PROCEDE DE PRODUCTION DE FILS DE VERRE REVETUS D’UN ENSIMAGE THERMOFUSIBLE ET PRODUITS RESULTANTS**
VERFAHREN ZUR HERSTELLUNG VON GLASSEIDEFÄDEN MIT SCHMELTZSCHICHTEN UND PRODUKTEN DARAUS
METHOD FOR THE PRODUCTION OF GLASS THREADS COATED WITH A THERMOFUSIBLE SIZE AND PRODUCTS RESULTING THEREFROM

(30) Priorité: 21.03.2003 FR 0303685
(43) Date de publication de la demande: 21.12.2005
(73) Titulaire: Saint-Gobain Technical Fabrics Europe, 73000 Chambéry (FR)
(72) Inventeur: GAS, Bruno, F-73000 Chambéry (FR); BOURGEOISAT, Hervé, F-73420 Viviers du Lac (FR); BESSON, Yvan, 73420 Mery (FR); RICHARD, Daniel, F-73800 Sainte Hélène du Lac (FR)
(74) Mandataire: Jamet, Vincent
(86) Numéro de dépôt international: PCT/FR2004/000646
(87) Numéro de publication internationale: WO 2004/085331

(56) Documents cités:
- WO-A-98/51633
- US-B1- 6 211 280

## Description

La présente invention se rapporte à la fabrication de fils de renforcement entrant dans la constitution de composites. Elle concerne plus précisément un procédé de production de fils de verre revêtus d'un ensimage thermofusible ainsi que les fils obtenus et les composites réalisés à partir desdits fils.

La fabrication des fils de verre de renforcement est réalisée de manière connue à partir de filets de verre fondu s'écoulant des multiples orifices d'une filière. Ces filets sont étirés en filaments continus, éventuellement ils sont associés à des filaments d'une autre matière, avant d'être rassemblés en fils qui sont collectés, le plus souvent sous la forme d'enroulements.

Avant leur rassemblement sous forme de fils, les filaments de verre passent sur un dispositif permettant de les revêtir d'une composition d'ensimage. Le dépôt de l'ensimage est essentiel. D'une part, il permet l'obtention du fil en protégeant les filaments de l'abrasion par contact avec les divers organes de mise en oeuvre, ce qui évite leur casse pendant la fabrication, et éventuellement lors de leur utilisation. D'autre part, l'ensimage permet d'associer le fil avec les matières organiques et/ou inorganiques à renforcer en favorisant le mouillage et l'imprégnation des fils par ces matières.

De manière générale, l'ensimage renforcer l'adhésion entre le verre et les matières à renforcer conduisant à des propriétés mécaniques améliorées. L'ensimage favorise aussi la cohésion des filaments entre eux ce qui se traduit par une meilleure intégrité du fil, cette propriété étant notamment recherchée dans les applications textiles où les fils doivent résister à de fortes contraintes mécaniques lors du tissage.

Les compositions d'ensimage les plus couramment utilisées sont des compositions aqueuses (à plus de 85 % en poids d'eau) renfermant des composés aptes à réticuler postérieurement au dépôt sur les filaments, notamment sous l'effet d'un traitement thermique effectué après la collecte des fils. Faciles à élaborer et à déposer, ces compositions d'ensimage présentent en outre une bonne stabilité et ne polymérisent pas prématurément en rendant le dépôt impossible, que ce soit pendant le stockage ou sous la filière.

Ainsi, dans US 6 211 280 B1, il est décrit un procédé de fabrication de fils de verre revêtus d'un revêtement secondaire dans lesquels les filaments constituant lesdits fils sont ensimés au moyen d'une composition aqueuse comprenant un agent de couplage et des additifs.

Dans WO 98/51633, il est prévu un procédé de fabrication de fils de verre dans lequel on revêt les filaments d'un ensimage déposé sous la forme d'au moins deux compositions séparées présentant un écart de viscosité inférieur à 150 cP, le mélange de ces compositions étant apte à polymériser à température ambiante pour former l'ensimage.

Pour que les fils puissent être associés efficacement avec les matières à renforcer, il est cependant nécessaire d'éliminer l'eau ce que l'on obtient généralement en séchant les enroulements de fils dans des étuves. Néanmoins, ce traitement ne donne pas entièrement satisfaction parce que d'une part il est coûteux (les frais d'investissement en étuves et de fonctionnement, en particulier liés à la consommation d'énergie, sont importants), et d'autre part il provoque une migration des composants de l'ensimage vers l'extérieur de l'enroulement conduisant à un fil de qualité variable. Dans le cas des fils composites, associant des filaments de verre et des filaments de matière organique thermoplastique, il peut arriver que les filaments organiques aient une température de changement d'état (transition vitreuse par exemple) proche de 100°C, ce qui interdit de porter ces fils à une température suffisante pour en éliminer l'eau.

Une solution permettant d'éviter le séchage a consisté à utiliser un ensimage thermofusible (« hot melt » en anglais) basé sur un polymère thermoplastique qui a la propriété d'être liquide lorsqu'il est chauffé et de se solidifier en refroidissant. Appliqué à chaud (à une température supérieure à sa température de solidification), un tel ensimage permet d'obtenir un gainage plus ou moins complet des filaments. Le choix de la nature du polymère dépend de la matrice à renforcer et/ou des filaments organiques associés dans le fil composite ; il a une incidence directe sur la facilité de mise en oeuvre du fil et sur le niveau de performances mécaniques des matériaux composites réalisés à partir de ces fils.

Un inconvénient des polymères thermofusibles réside dans leur aptitude insuffisante à s'accrocher correctement au verre. Dans le cas des fils composites, il en résulte une mauvaise cohésion des filaments qui tendent à se regrouper en fonction de leur nature d'où une ségrégation pouvant conduire à la formation de boucles. Dans certaines applications telles que le tissage, ce fil ne peut pas être utilisé parce des noeuds vont se former, entraînant l'arrêt des machines de tissage.

Pour remédier à cet inconvénient, l'ajout d'au moins un agent de couplage dans l'ensimage déposé sur le verre s'avère nécessaire. L'agent de couplage doit avoir à la fois une affinité pour le verre et la matrice à renforcer, et éventuellement les filaments autres que le verre lorsque les fils sont composites. L'agent de couplage doit aussi être compatible avec les constituants de l'ensimage sans toutefois réagir prématurément avec ceux-ci, ce qui provoquerait une augmentation importante de la viscosité, voire la gélification complète, et rendrait impossible le dépôt sur le verre.

La présente invention a pour but de fournir un procédé de production de fils de verre ensimés par des compositions renfermant au moins un agent de couplage et un polymère thermofusible, ce procédé permettant d'éviter les réactions précoces ou intempestives entre ces constituants et ne nécessitant pas de séchage.

Ce but est atteint par le procédé selon l'invention selon lequel on étire des filets de verre fondu, s'écoulant d'orifices disposés à la base d'une ou plusieurs filières, sous la forme d'une ou plusieurs nappes de filaments continus, puis on rassemble les filaments en un ou plusieurs fils que l'on collecte sur un ou plusieurs supports en mouvement et on dépose sur les filaments de verre une première composition renfermant un agent de couplage, puis on dépose sur lesdits filaments une deuxième composition au plus tard lors du rassemblement des filaments en fil(s), ce procédé étant caractérisé en ce que la deuxième composition compred un polymère thermofusible à l'état fondu.

Le procédé selon l'invention présente plusieurs avantages : il utilise un ensimage faisant intervenir peu ou pas d'eau, qui donc s'affranchit des traitements de séchage des fils, ce qui représente une économie importante. Il permet d'améliorer l'accrochage de l'agent de couplage sur le verre : ce dernier étant appliqué en premier, il dispose ainsi d'un temps suffisant pour réagir avec le verre avant d'entrer en contact avec le polymère thermofusible. De la même façon, l'agent de couplage étant déposé séparément, la quantité finale sur le fil peut être ajustée précisément. Le procédé permet de limiter la perte de l'agent de couplage par évaporation puisque ce dernier est appliqué à la température ambiante (c'est-à-dire sans apport d'énergie supplémentaire) sur des filaments refroidis, avec pour conséquences un risque d'inhalation de substances toxiques par les opérateurs maintenu à un niveau très faible et une économie substantielle (l'agent de couplage représentant généralement une part importante du coût de l'ensimage).

Le procédé selon l'invention grâce aux avantages qu'il apporte permet d'obtenir des fils de qualité uniforme sur toute leur longueur.

Ce procédé simple à mettre en oeuvre offre notamment une grande liberté dans le choix de l'agent de couplage et du polymère thermofusible du fait qu'ils sont amenés séparément sur les filaments : il simplifie ainsi la préparation des compositions d'ensimage souvent délicate à cause des problèmes de compatibilité et/ou d'homogénéisation des constituants, problèmes qui peuvent s'accentuer lors du stockage et de la dépose de l'ensimage. Par ailleurs, le procédé s'applique avec les mêmes avantages à la réalisation de différents types de fils ensimés à base de verre comme indiqué ci-après.

Dans la présente invention, on entend par « fils de verre » des fils à base de verre, c'est-à-dire non seulement des fils formés uniquement de filaments de verre, mais également des fils formés de filaments de verre et de filaments de matière organique thermoplastique. Dans ce dernier cas, pendant l'étirage des filaments de verre, on extrude à partir d'une tête de filage et on entraîne simultanément les filaments de matière organique formés (ou on amène simultanément les fils de matière organique issus par exemple d'enroulements), les trajets suivis par les filaments de verre et les filaments (ou fils) de matière organique convergeant l'un vers l'autre avant que lesdits filaments soient rassemblés en au moins un fil composite entraîné mécaniquement.

Les filaments de verre peuvent être étirés sous la forme d'une nappe à partir d'une filière ou sous la forme de plusieurs nappes à partir d'une ou plusieurs filières et peuvent être rassemblés en un ou plusieurs fils. La vitesse d'étirage des filaments de verre dans le procédé selon l'invention est généralement comprise entre 6 et 50, de préférence 9 et 20 mètres par seconde.

De façon générale selon l'invention, le dépôt des compositions, en particulier de la composition renfermant l'agent de couplage (première composition), est effectué sur les filaments de verre refroidis, c'est-à-dire qui présentent une température n'excédant pas 90°C, de préférence 75°C, pour éviter les risques d'évaporation sélective et permettre de mieux contrôler la quantité de matière déposée sur les filaments. Eventuellement, le refroidissement des filaments peut être accéléré par projection d'un fluide approprié, par exemple une pulvérisation d'eau qui s'évapore naturellement avant le dépôt de l'agent de couplage, et/ou un soufflage d'air.

Le dépôt de la première composition renfermant l'agent de couplage se fait en cours d'étirage des filaments de verre, et avant leur rassemblement en fils afin d'éviter qu'ils ne se cassent sur le dispositif de rassemblement. De préférence, le dépôt de la première composition se fait dès que les filaments ont atteint la température de refroidissement indiquée précédemment de manière à avoir un temps de contact maximal entre le verre et l'agent de couplage, ce qui permet d'augmenter l'accrochage de l'agent de couplage avant l'application de la deuxième composition contenant le polymère thermofusible. L'application peut se faire par exemple à l'aide d'un rouleau ensimeur, d'un dispositif à lèvre(s) ou d'un pulvérisateur. De préférence, on utilise un rouleau ensimeur.

Le dépôt de la deuxième composition renfermant le polymère thermofusible intervient après que les filaments ont été revêtus de la première composition, et au plus tard lors du rassemblement des filaments en fils. Le dépôt peut être réalisé à l'aide des mêmes dispositifs que ceux utilisés pour la première composition, ceux-ci devant être en outre pourvus de moyens permettant de maintenir le polymère thermofusible à l'état fondu. De manière générale, la température pour l'application de la composition thermofusible est inférieure ou égale à 200°C, de préférence est inférieure ou égale à 160°C et mieux encore est supérieure à 100°C. La température est choisie de manière que la viscosité de la composition thermofusible soit suffisamment basse pour que le dépôt sur les filaments de verre s'effectue correctement et que les traces d'eau résiduelles puissent être éliminées. Ces exigences sont satisfaites avec une ne viscosité de l'ordre de 200 à 600 mPa.s, de préférence 300 à 500 mPa.s. Les conditions de température précitées permettent en outre de limiter les risques de dégradation thermique du polymère pouvant altérer ses propriétés, en maintenant néanmoins une consommation d'énergie raisonnable et des conditions de sécurité satisfaisantes pour les opérateurs.

La composition appliquée en premier lieu sur les filaments de verre comprend un ou plusieurs agents de couplage aptes à s'accrocher sur le verre et à favoriser l'accrochage du polymère thermofusible déposé ultérieurement. L'agent de couplage peut être choisi par exemple parmi les silanes organofonctionnels, notamment renfermant un ou des groupes hydrolysables, tels que le gamma-aminopropyltriéthoxysilane, le gamma-glycidoxypropyltriméthoxy-silane, le gamma-métacryloxypropyltriméthoxysilane, le vinyltriméthoxysilane, les titanates et les zirconates. L'agent de couplage préféré est le gamma-aminopropyltriéthoxysilane.

La première composition peut comprendre en outre un diluant aidant à la mise en solution du ou des agents de couplage. Les diluants éventuels sont essentiellement l'eau et tout composant organique ayant le cas échéant au moins une fonction particulière dans l'ensimage, telle que protection des filaments, souplesse du fil... De préférence, la composition ne comprend aucun solvant organique pour des raisons de toxicité et d'émission de composés organiques volatils (VOC). De préférence encore, la composition contient de l'eau en quantité aussi faible que possible mais néanmoins suffisante pour procéder au dépôt dans des conditions acceptables et obtenir que l'évaporation de l'eau, une fois le dépôt réalisé, se fasse naturellement sans apport supplémentaire d'énergie.

La concentration d'agent de couplage dans la composition dépend des conditions d'application, notamment de la vitesse d'étirage des filaments de verre et du dispositif utilisé pour le dépôt. Par exemple, on obtient de bons résultats avec une composition aqueuse comprenant au moins 5 % en poids d'agent de couplage déposée sur les filaments défilant à une vitesse de l'ordre de 9 à 17 mètres par seconde au moyen d'un rouleau ensimeur.

La deuxième composition peut comprendre un ou plusieurs polymères aptes à être déposés et à résister à la dégradation thermique dans les conditions du procédé. Les polymères thermofusibles peuvent être choisis parmi les polymères solides à une température inférieure à 50°C et dont la viscosité est comprise entre 200 et 600 mPa.s, de préférence entre 300 et 500 mPa.s, à la température du dépôt qui est généralement de l'ordre de 100 à 200 °C.

Le choix du polymère dépend essentiellement de la matière à renforcer : notamment, il est important que le polymère soit compatible avec ladite matière si l'on veut que le composite final ait un bon niveau de performances mécaniques.

Lorsque le fil est composite, le choix dépend également de la nature des filaments thermoplastiques utilisés. Il convient notamment de faire en sorte que le polymère thermofusible soit compatible avec ces filaments, ce qui évite les phénomènes de répulsion amenant les filaments à se regrouper selon leur nature (verre ou thermoplastique) et donc à se répartir de manière non uniforme au sein du fil.

Par exemple, lorsque les filaments thermoplastiques sont constitués essentiellement d'une ou plusieurs polyoléfines, telles que le polyéthylène ou le polypropylène, le polymère thermofusible est un copolymère d'éthylène et/ou de propylène et d'acide acrylique ou d'anhydride maléique.

Lorsque ces mêmes filaments sont constitués essentiellement d'un ou plusieurs polyesters thermoplastiques tels que le polyéthylènethéréphtalate (PET) ou le polybutylènethéréphtalate (PBT), le polymère thermofusible peut être un époxy, par exemple appartenant au groupe des DGEBA (diglycidyl éther du bisphénol A).

La quantité de polymère thermofusible déposé sur les filaments de verre représente en général 2 à 15 % en poids du verre, de préférence 3 à 8 %. Au-dessus de 15 %, l'état de solidification du polymère sur les filaments avant leur rassemblement sous forme de fil n'est pas complet, ce qui se traduit par un collage important des filaments entre eux. Le fil obtenu est inutilisable car il manque de souplesse.

La deuxième composition peut comprendre en outre un diluant permettant d'adapter la viscosité aux conditions du dépôt. Il s'agit le plus souvent d'un polymère de nature similaire au polymère thermofusible mais qui n'est pas apte à réagir avec l'agent de couplage, par exemple une cire, notamment de polyoléfine.

Les compositions déposées sur les filaments de verre peuvent en outre comprendre un ou plusieurs composants conférant des propriétés particulières à l'ensimage. Ces composants (désignées ci-après par additifs) peuvent être apportés par l'une et/ou l'autre des compositions, de préférence par la composition thermofusible.

Notamment, à titre d'additifs on peut citer :
- les agents lubrifiants, de préférence non ioniques,
- les agents anti-statiques
- les antioxydants
- les agents anti-UV
- les agents de nucléation
- les pigments.

De préférence, la teneur en agents de chacune des catégories précitées est inférieure ou égale à 1 % en poids de l'ensimage, et avantageusement la teneur totale en additifs est inférieure à 5 %.

Le choix de l'agent de couplage et du polymère thermofusible, ainsi que de leur quantité dépend notamment de la matière à renforcer par les fils selon l'invention et de l'application recherchée.

En règle générale, la quantité totale des compositions déposée sur les filaments de verre représente 2 à 15 % en poids du verre, de préférence 3 à 8 %.

Les filaments de verre revêtus de l'ensimage peuvent être associés à des filaments de matière organique thermoplastique avant d'être assemblés pour former un ou plusieurs fils composites. L'association se fait généralement en projetant les filaments thermoplastiques dans la nappe de filaments de verre pour obtenir un co-mêlage des filaments. La projection peut être réalisée par tout moyen connu pour remplir ce rôle, par exemple un dispositif Venturi.

La matière thermoplastique de constitution des filaments peut être choisie parmi les matières aptes à donner des filaments, notamment par extrusion dans un dispositif tel qu'une tête de filage. A titre d'exemples, on peut citer les polyoléfines, telles que le polyéthylène et le polypropylène, les polyesters thermoplastiques tels que le polyéthylènetéréphtalate (PET) et le polybutylènetéréphtalate (PBT), les polyéthers et les polyamides tels que le polyamide-11 et le polyamide-12.

Les fils sont généralement collectés sous forme d'enroulements sur des supports en rotation, par exemple pour former des bobines de fils continus.

Ils peuvent encore être collectés sur des supports récepteurs en translation permettant de former une nappe de fils entremêlés (« mat ») continus ou coupes. On peut pour cela utilisez par exemple un dispositif de projection des fils permettant également de les étirer, éventuellement de les couper, vers la surface de collecte se déplaçant transversalement à la direction des fils projetés.

Les fils obtenus selon l'invention peuvent ainsi se trouver sous différentes formels après la collecte : bobines de fils continus (rovings, gâteaux), fils coupés et assemblages (mats, réseaux). Après transformation, ils peuvent se présenter sous la forme de rubans, tresses et tissus.

Les filaments de verre formant ces fils possèdent un diamètre compris entre 10 et 30 micromètres, de préférence entre 14 et 23 micromètres, et le verre peut être n'importe quel verre connu pour la réalisation de fils de renforcement, par exemple du verre E, AR (alcali-résistant), R ou S. On préfère les verres E et AR.

Lorsque le fil est constitué uniquement de verre, sa masse linéique peut varier entre 200 et 4000 tex, de préférence 640 et 2000 tex.

Pour les fils composites, la teneur en verre peut varier de 30 à 85 % en poids du fil, de préférence 53 à 83 %.

A la température ambiante, les fils obtenus sont revêtus d'un ensimage solidifié dont la teneur pondérale est constante sur toute la longueur du fil.

Les fils selon l'invention peuvent être associés à différentes matières à renforcer, notamment en vue de réaliser des pièces composites présentant de bonnes propriétés mécaniques. Les composites sont avantageusement obtenus par association d'au moins des fils selon la présente invention et d'au moins une matière organique thermoplastique telles que les polyoléfines, les polychlorures de vinyle (PVC) et les polyesters.

La teneur en verre dans les composites est généralement comprise entre 20 et 80 % en poids, de préférence 28 et 60 % .

Les exemples qui suivent permettent d'illustrer l'invention sans toutefois la limiter.

### EXEMPLE 1

Des filaments de verre E de 18,5 µm de diamètre obtenus à partir des filets de verre issus d'une filière comportant 800 orifices sont étirés mécaniquement à la vitesse de 14 m/s.

Sur leur trajet, ils sont revêtus d'une solution aqueuse à 16,10 % en poids de gamma-aminopropyltriéthoxysilane (Silquest A 1100; commercialisé par CROMPTON) au contact d'un rouleau ensimeur. La température ambiante au niveau du rouleau est de l'ordre de 40°C.

Les filaments passent ensuite sur un deuxième rouleau ensimeur disposé à environ 30 cm du premier, chauffé à 140°C, qui délivre une composition renfermant 70 % en poids de copolymère éthylène-acide acrylique (AC 540 ; commercialisé par HONEYWELL) et 30 % en poids de polyéthylène (AC 617 ; commercialisé par HONEYWELL).

Des filaments de polypropylène extrudés à partir d'une tête de filage comportant 600 trous passent au travers d'un dispositif Venturi qui les projette dans la nappe de filaments de verre après son passage sur le deuxième rouleau ensimeur. Les filaments de verre et de polypropylène intimement mélangés sont ensuite rassemblés en un fil unique qui est bobiné sous la forme d'un roving.

Le fil obtenu comprend 60 % en poids de filaments de verre ayant une perte au feu égale à 4 %.

Ce fil est aisément manipulable : il est souple, intègre, présente un revêtement uniforme sur toute sa longueur et une bonne répartition des filaments de verre et des filaments de polypropylène au sein du fil, c'est-à-dire un co-mêlage important de l'ensemble des filaments. Il peut être tissé et le tissu obtenu utilisé pour renforcer des matières organiques thermoplastiques, notamment des polyoléfines (PE, PP).

### EXEMPLE 2 (comparatif)

On procède dans les conditions de l'exemple 1 modifiées en ce que les deux compositions sont préalablement mélangées pour former une composition unique qui est déposée sur les filaments par le biais du rouleau ensimeur chauffé.

La composition obtenue a une viscosité très élevée qui rend son application impossible sur les filaments avec un rouleau ensimeur.

### EXEMPLE 3

Des filaments de verre E de 18,5 µm de diamètre obtenus à partir des filets de verre issus d'une filière comportant 800 orifices sont étirés mécaniquement à la vitesse de 14 m/s.

Sur leur trajet, ils sont revêtus d'une solution aqueuse à 16,10 % en poids de gamma-aminopropyltriéthoxysilane (Silquest A 1100 ; commercialisé par CROMPTON) au contact d'un rouleau ensimeur. La température ambiante au niveau du rouleau est de l'ordre de 40°C.

Les filaments passent ensuite sur un deuxième rouleau ensimeur disposé à environ 30 cm du premier, chauffé à 140°C, qui délivre un polymère époxy de type DGEBA (DER 671 commercialisé par Dow Chemical).

Des filaments de polyéthylènetéréphtalate extrudés à partir d'une tête de filage comportant 600 trous passent au travers d'un dispositif Venturi qui les projette dans la nappe de filaments de verre après son passage sur le deuxième rouleau ensimeur. Les filaments de verre et de polyéthylènetéréphtalate intimement mélangés sont ensuite rassemblés en un fil unique qui est bobiné sous la forme d'un roving.

Le fil obtenu est constitué à 65 % de verre. Il se manipule facilement et présente des propriétés semblables à celles du fil de l'exemple 1.

Ce fil peut être utilisé en tant que renfort dans du PVC, notamment dans la réalisation de profilés de fenêtres.

## Revendications

1. Procédé de production de fils de verre ensimés selon lequel on étire des filets de verre fondu, s'écoulant d'orifices disposés à la base d'une ou plusieurs filières, sous la forme d'une ou plusieurs nappes de filaments continus, puis on rassemble les filaments en un ou plusieurs fils que l'on collecte sur un ou plusieurs supports en mouvement, tel qu'on dépose sur les filaments de verre une première composition renfermant un agent de couplage, puis on dépose sur lesdits filaments une deuxième composition au plus tard lors du rassemblement des filaments en fil(s), **caractérisé en ce que** la deuxième composition comprend un polymère thermofusible à l'état fondu.

2. Procédé selon la revendication 1, **caractérisé en ce que** la première composition est déposée sur les filaments de verre refroidis à une température n'excédant pas 90°C.

3. Procédé selon la revendication 2, **caractérisé en ce que** le refroidissement des filaments est accéléré par projection d'un fluide, notamment une pulvérisation d'eau ou un soufflage d'air.

4. Procédé selon l'une des revendications 1 à 3, **caractérisé en ce que** l'agent de couplage est choisi parmi les silanes organofonctionnels, notamment renfermant un ou des groupes hydrolysables, les titanates et les zirconates.

5. Procédé selon la revendication 4, **caractérisé en ce que** l'agent de couplage est le gamma-aminopropyltriéthoxysilane.

6. Procédé selon l'une des revendications 1 à 5, **caractérisé en ce que** la deuxième composition est déposée à une température inférieure ou égale à 200°C.

7. Procédé selon l'une des revendications 1 à 6, **caractérisé en ce que** la viscosité de la deuxième composition est de l'ordre de 200 à 600 mPa.s, de préférence de l'ordre de 300 à 500 mPa.s, à une température comprise entre 100 et 200°C.

8. Procédé selon l'une des revendications 1 à 7, **caractérisé en ce que** le polymère thermofusible est solide à une température inférieure à 50°C.

9. Procédé selon l'une des revendications 1 à 8, **caractérisé en ce que** les filaments de verre sont associés à des filaments de matière organique thermoplastique avant leur rassemblement sous la forme de fil(s).

10. Procédé selon la revendication 9, **caractérisé en ce que** la matière organique thermoplastique est choisie parmi les polyoléfines, les polyesters thermoplastiques, les polyéthers et les polyamides.

11. Procédé selon l'une des revendications 1 à 10, **caractérisé en ce que** les compositions déposées sur le fil comprennent en outre au moins un additif choisi parmi les agents lubrifiants, les agents anti-statique, les antioxydants, les agents anti-UV, les agents de nucléation et les pigments.

12. Procédé selon l'une des revendications 1 à 11, **caractérisé en ce que** la quantité totale des compositions déposées sur les filaments de verre représente 2 à 15 % en poids du verre.

## Claims

1. Process for producing sized glass strands, whereby molten glass streams, flowing out of orifices located in the base of one or more bushings, are drawn in the form of one or more sheets of continuous filaments, the filaments are then assembled into one or more strands that are collected on one or more moving supports, such that a first composition containing a coupling agent is deposited on the glass filaments and then a second composition is deposited on said filaments, at the latest during assembly of the filaments into one or more strands, **characterized in that** the second composition comprises a hot-melt polymer in the melt state.

2. Process according to Claim 1, **characterized in that** the first composition is deposited on the glass filaments cooled to a temperature not exceeding 90°C.

3. Process according to Claim 2, **characterized in that** the cooling of the filaments is speeded up by spraying a fluid, especially by spraying water or blowing air.

4. Process according to one of Claims 1 to 3, **characterized in that** the coupling agent is chosen from organofunctional silanes, especially those containing one or more hydrolizable groups, titanates and zirconates.

5. Process according to Claim 4, **characterized in that** the coupling agent is γ-aminopropyltriethoxysilane.

6. Process according to one of Claims 1 to 5, **characterized in that** the second composition is deposited at a temperature of less than or equal to 200°C.

7. Process according to one of Claims 1 to 6, **characterized in that** the viscosity of the second composition is around 200 to 600 mPa.s, preferably around 300 to 500 mPa.s, at a temperature between 100 and 200°C.

8. Process according to one of Claims 1 to 7, **characterized in that** the hot-melt polymer is solid at a temperature below 50°C.

9. Process according to one of Claims 1 to 8, **characterized in that** the glass filaments are combined with filaments of a thermoplastic organic material before they are assembled in the form of one or more strands.

10. Process according to Claim 9, **characterized in that** the thermoplastic organic material is chosen from polyolefins, thermoplastic polyesters, polyethers and polyamides.

11. Process according to one of Claims 1 to 10, **characterized in that** the compositions deposited on the strand furthermore include at least one additive chosen from lubricants, antistatic agents, antioxidants, UV stabilizers, nucleating agents and pigments.

12. Process according to one of Claims 1 to 11, **characterized in that** the total amount of the compounds deposited on the glass filaments represents 2 to 15% by weight of the glass.

## Patentansprüche

1. Verfahren zur Herstellung von mit Schlichte überzogenen Glasfäden, gemäß welchem Glasstrahlen, die aus im Boden einer oder mehrerer Spinndüsen angeordneten Öffnungen austreten, zur Form einer oder mehrerer Bahnen aus endlosen Filamenten gezogen und anschließend die Filamente zu einem oder mehreren Fäden, die auf einem oder mehreren sich bewegenden Trägern gesammelt werden, derart vereinigt werden, dass auf die Glasfilamente eine ein Haftmittel umfassende erste Zusammensetzung und danach spätestens während der Vereinigung der Filamente zu einem oder mehreren Fäden auf diese Filamente eine zweite Zusammensetzung aufgebracht wird, **dadurch gekennzeichnet, dass** die zweite Zusammensetzung ein heißschmelzbares Polymer im geschmolzenen Zustand umfasst.

2. Verfahren nach Anspruch 1, **dadurch gekennzeichnet, dass** die erste Zusammensetzung auf die abgekühlten Glasfilamente bei einer 90 °C nicht übersteigenden Temperatur aufgebracht wird.

3. Verfahren nach Anspruch 2, **dadurch gekennzeichnet, dass** die Abkühlung der Filamente durch Aufschleudern eines Fluids, insbesondere Aufsprühen von Wasser oder Aufblasen von Luft, beschleunigt wird.

4. Verfahren nach einem der Ansprüche 1 bis 3, **dadurch gekennzeichnet, dass** das Haftmittel aus insbesondere eine oder mehrere hydrolysierbare Gruppen enthaltenden organofunktionellen Silanen, aus Titanaten und Zirconaten ausgewählt wird.

5. Verfahren nach Anspruch 4, **dadurch gekennzeichnet, dass** das Haftmittel γ-Aminopropyltriethoxysilan ist.

6. Verfahren nach einem der Ansprüche 1 bis 5, **dadurch gekennzeichnet, dass** die zweite Zusammensetzung bei einer Temperatur aufgebracht wird, die niedriger als oder gleich 200 °C ist.

7. Verfahren nach einem der Ansprüche 1 bis 6, **dadurch gekennzeichnet, dass** die Viskosität der zweiten Zusammensetzung etwa 200 bis 600 mPa·s und vorzugsweise etwa 300 bis 500 mPa·s bei einer Temperatur von 100 bis 200 °C beträgt.

8. Verfahren nach einem der Ansprüche 1 bis 7, **dadurch gekennzeichnet, dass** das heißschmelzbare Polymer bei einer Temperatur von unterhalb von 50 °C fest wird.

9. Verfahren nach einem der Ansprüche 1 bis 8, **dadurch gekennzeichnet, dass** die Glasfilamente vor der Vereinigung zur Form von einem oder mehreren Fäden mit Filamenten aus thermoplastischem organischem Material verbunden werden.

10. Verfahren nach Anspruch 9, **dadurch gekennzeichnet, dass** das thermoplastische organische Material aus Polyolefinen, Polyestern, die thermoplastisch sind, Polyethern und Polyamiden ausgewählt wird.

11. Verfahren nach einem der Ansprüche 1 bis 10, **dadurch gekennzeichnet, dass** die auf den Faden aufgebrachten Zusammensetzungen außerdem mindestens ein Additiv umfassen, das aus Gleitmitteln, antistatischen Mitteln, Antioxydantien, UV-Blockern, Keimbildungsmitteln und Pigmenten ausgewählt ist.

12. Verfahren nach einem der Ansprüche 1 bis 11, **dadurch gekennzeichnet, dass** die Gesamtmenge der auf die Glasfilamente aufgebrachten Zusammensetzungen 2 bis 15 Gew.-% des Glases ausmacht.
